**Europäisches Patentamt**

**European Patent Office**

**Office européen des brevets**

(19)

(11) Veröffentlichungsnummer : **0 221 477**
**B1**

(12)                     EUROPÄISCHE PATENTSCHRIFT

(45) Veröffentlichungstag der Patentschrift :
22.02.89

(51) Int. Cl.⁴ : **B 65 G 51/06**

(21) Anmeldenummer : 86114811.2

(22) Anmeldetag : 24.10.86

(54) Rohrpostanlage.

(30) Priorität : 28.10.85 DE 3538241

(43) Veröffentlichungstag der Anmeldung :
13.05.87 Patentblatt 87/20

(45) Bekanntmachung des Hinweises auf die Patenterteilung : 22.02.89 Patentblatt 89/08

(84) Benannte Vertragsstaaten :
AT CH DE FR GB IT LI NL

(56) Entgegenhaltungen :
DE-A- 2 005 103
US-A- 4 557 638

(73) Patentinhaber : **Schloz, Werner**
**Neuffenstrasse 118**
**D-7317 Wendlingen (DE)**

(72) Erfinder : **Schloz, Werner**
**Neuffenstrasse 118**
**D-7317 Wendlingen (DE)**

(74) Vertreter : **Patentanwälte Kohler - Schwindling -**
**Späth**
**Hohentwielstrasse 41**
**D-7000 Stuttgart 1 (DE)**

**Beschreibung**

Die Erfindung betrifft eine Rohrpostanlage mit einem Rohrleitungssystem, mit in dem Rohrleitungssystem luftabdichtend geführten Rohrpostbüchsen und mit einem Saug/Druck-Gebläse zum Erzeugen eines Über- oder Unterdruckes im Rohrleitungssystem, wobei der Innenquerschnitt des Rohrleitungssystems und der Umriß der Rohrpostbüchsen senkrecht zur Fahrtrichtung rechteckig sind und die Rohrpostbüchsen quaderförmig mit einer Breitseite und einer Schmalseite ausgebildet sind, wobei ferner der Umriß des Quaders senkrecht zur Fahrtrichtung kleiner als der Innenquerschnitt ist und der Quader senkrecht zur Fahrtrichtung mit umlaufenden Dichtprofilen versehen ist, die in Fahrtrichtung ballig ausgebildet sind.

Eine derartige Rohrpostanlage ist aus der GB-B 1 338 051 bekannt.

Bei der bekannten Rohrpostanlage werden quaderförmige Behälter als Rohrpostbüchsen verwendet. Die Behälter sind an ihren Stirnseiten mit umlaufenden, im wesentlichen im Querschnitt rechteckförmigen Dichtprofilen versehen, die lediglich im Rahmen ihrer Außenkanten schräg angefast sind.

Die bekannte Rohrpostanlage soll zur Verbindung eines Kundenschalters in einer Bank mit einer zentralen Kassenanlage dienen. Um die Entfernung zwischen diesen beiden Stationen zu überbrücken ist eine im Querschnitt ebenfalls rechteckige Rohrpostleitung vorgesehen, die die beiden Stationen in weiten Bögen verbindet.

Damit ist die Einsatzmöglichkeit der bekannten Rohrpostanlage weitgehend beschränkt, insbesondere ist ein nachträglicher Einbau beispielsweise in abgehängte Decken von Gebäuden nahezu unmöglich, weil dort sehr kleine Krümmungsradien eingehalten werden müssen, die mit der bekannten Rohrpostanlage nicht zu realisieren sind. die langgestreckte quaderförmige Gestalt der bei der bekannten Rohrpostanlage verwendeten Rohrpostbüchsen in Verbindung mit den ebenfalls im wesentlichen eine quaderartige Hüllfläche definierenden Dichtprofilen bringt es nämlich notwendig mit sich, daß nur Rohrleitungssysteme mit sehr großen Krümmungsradien eingesetzt werden können, weil die Rohrpostbüchsen bei kleineren Krümmungsradien stecken bleiben würden.

Darüberhinaus sind beispielsweise aus der US-A-3 888 433, der US-A-1 951 820 sowie der DE-A-323 886 sogenannte « Zettelrohrpostanlagen » bekannt. Bei derartigen Zettelrohrpostanlagen werden statt relativ sperriger quaderförmiger Rohrpostbüchsen nur einzelne Zettel, Bündel von Zetteln oder allenfalls schmale Kartons befördert, die an ihrem vorderen Ende mit seitlich schräg nach hinten abstehenden Flügeln versehen sind und so die relativ flach ausgebildeten rechteckförmigen Rohrleitungen dicht ausfüllen.

Zwar ist es bei derartigen Zettelrohrpostanlagen möglich, infolge der Biegsamkeit der verschickten Zettel die Krümmungsradien der Rohrleitungen etwas kleiner zu dimensionieren, die bereits erwähnte DE-A-323 886 zeigt jedoch bereits daß selbst bei Zettelrohrpostanlagen infolge zu kleiner Krümmungsradien Probleme auftreten können, weswegen dort Maßnahmen beschrieben werden, um durch Verwendung von speziellen Krümmern mit nicht parallelen gekrümmten Rohrleitungswänden kleinere Krümmungsradien zu erzielen.

In der DD-A-67 927 ist ein weiterer Spezialbogen für Rohrpostanlagen, allerdings mit zylindrischen Rohren, beschrieben. Im Bereich des Krümmers wird bei diesem Spezialbogen ein Rohr größeren Durchmessers verwendet, das an den Anschlußstellen des Krümmers über kegelige Anschlußteile an die weiterführenden Rohrleitungen angeschlossen werden muß.

Schließlich beschreibt die EP-A-0 034 940 noch eine Rohrpostanlage mit quaderförmigen Rohrpostbüchsen, es werden jedoch auch bei dieser bekannten Rohrpostanlage als Krümmer Spezialbauteile mit unregelmäßigem Verlauf der Seitenwände verwendet, um den bereits genannten Problemen bei Krümmern mit kleinem Krümmungsradius zu begegnen.

Der Erfindung liegt demgegenüber die Aufgabe zugrunde, eine Rohrpostanlage der eingangs genannten Art dahingehend weiterzubilden, daß auch Krümmer mit kleineren Krümmungsradien verwendet werden können, ohne daß für die Krümmer teure und aufwendige Spezialbauteile mit komplizierter Formgebung erforderlich sind, die im übrigen wegen ihres unstetigen Verlaufs auch schlechte Fahreigenschaften (Fahrgeräusche) mit sich bringen.

Diese Aufgabe wird erfindungsgemäß dadurch gelöst, daß die Dichtprofile zumindest abschnittsweise kreiszylindrische Oberflächen aufweisen und sich an Ihren Enden im Bereich der Ecken durchdringen, daß ein auf der Schmalseite angeordneter schmaler Abschnitt des Dichtprofiles einen Oberflächen-Krümmungsradius aufweist, der gleich der halben lichten Weite des Innenquerschnittes in der Breitenrichtung senkrecht zur Fahrtrichtung ist und daß ein auf der Breitseite angeordneter breiter Abschnitt des Dichtprofils einen Oberflächen-Krümmungsradius aufweist, der gleich der halben lichten Weite des Innenquerschnitts in der Breitenrichtung senkrecht zur Fahrtrichtung ist und daß ein auf der Breitseite angeordneter breiter Abschnitt des Dichtprofils einen Oberflächen-Krümmungsradius aufweist, der gleich der halben lichten Weite des Innenquerschnitts in der schmalen Richtung senkrecht zur Fahrtrichtung ist.

Die der Erfindung zugrundeliegende Aufgabe wird damit vollkommen gelöst, weil aufgrund der vorstehend beschriebenen Formgebung der Rohrpostbüchsen Krümmungsradien für die Krümmer möglich sind, die in so geringer Größe beim Stand der Technik nicht erreichbar waren. Von besonderem Vorteil ist dabei, daß als Krümmer normale Rohrleitungsbauteile verwendet werden können, bei denen die Seitenwände der Krümmer sämtlich parallel zueinander verlaufen, so daß komplizierte und aufwendige Formgebungen damit entbehrlich sind.

Dies hat daneben auch den Vorteil, daß die Rohrpostbüchsen nicht nur die geraden Rohrleitungsabschnitte sondern auch Krümmer sicher und ohne Erschütterungen durchfahren können, weil die kreiszylindrische Oberfläche bewirkt, daß die Dichtprofile der vier Quaderseiten entlang einer umlaufenden Linie an den Innenoberflächen der Rohrleitungsabschnitte kontinuierlich anliegen.

Ein weiterer Vorteil besteht darin, daß eine zu große Reibung beim Durchfahren von Krümmern des Oberleitungssystems infolge von Verklemmungen sicher vermieden wird. Liegt nämlich der geometrische Mittelpunkt aller Radien der kreiszylindrisch gekrümmten Oberflächen der Abschnitte des Dichtprofils in der Symmetrieebene der quaderförmigen Rohrpostbüchse, so bedeutet dies, daß die Oberfläche stets eine gemeinsame Tangente mit der Innenoberfläche einer gekrümmten Innenoberfläche eines Rohrleitungskrümmers aufweist, weil nämlich der Radius des Krümmers mit dem Radius der Oberfläche des Dichtprofils fluchtet.

Die umlaufenden Dichtprofile können zwar grundsätzlich massiv mit durchgehender kreiszylindrischer Oberfläche ausgebildet sein, bei einer bevorzugten Ausgestaltung der Erfindung bestehen die Dichtprofile jedoch aus einer Gruppe zueinander paralleler und beabstandeter Einzel-Dichtprofile, deren Oberflächen auf einer kreiszylindrischen Hüllkurve liegen.

Diese Maßnahme hat den Vorteil daß die Dichtprofile in sich noch flexibler sind, weil die Einzel-Dichtprofile bei frontaler oder schräg seitlicher Beanspruchung besser ausweichen können. Auch wird das Gewicht der Rohrpostbüchse bei diesem Ausführungsbeispiel der Erfindung vermindert, was der Transportgeschwindigkeit bzw. der beförderbaren Nutzlast der Rohrpostbüchse zugute kommt.

Weiterhin ist bei der Erfindung besonders bevorzugt, wenn die Dichtprofile symmetrisch zu den Mittellinien der Breitseite und der Schmalseite angeordnet sind und wenn die quaderförmige Rohrpostbüchse in Fahrtrichtung hintereinander mit zwei umlaufenden Dichtprofilen versehen ist.

Die erstgenannte Maßnahme hat den Vorteil, daß bei einem üblichen, symmetrisch gekrümmten Rohrkrümmer völlig gleiche Verhältnisse an der inneren und der äußeren gekrümmten Rohrleitungswand, nur jeweils punktsymmetrisch gespiegelt, auftreten. Die zweitgenannte, an sich bekannte Maßnahme hat den ebenfalls an sich bekannten Vorteil, daß die Rohrpostbüchse sicher in den Rohrleitungsabschnitten geführt wird.

Schließlich ist noch eine Ausführungsform der Erfindung bevorzugt, bei der das Rohrleitungssystem schmale Krümmer mit gekrümmter Schmalseite sowie breite Krümmer mit gekrümmter Breitseite aufweist und bei dem die Krümmungsradien der Mittellinien der Krümmer gleich groß sind.

Diese Maßnahme hat den Vorteil, daß sich beim aufeinanderfolgenden Durchfahren schmaler und breiter Krümmer weitgehend gleich Fahrverhältnisse ergeben, so daß die Belastungen der Rohrpostbüchse weitgehend gleichartig sind und sich daraus auch eine geringe Geräuschentwicklung beim Durchfahren der Krümmer ergibt. Außerdem ist gewährleistet, da die Längsseite der Rohrpostbüchse in beiden Krümmern denselben minimalen Abstand von den Innenwänden des Rohrleitungssystems aufweist, so daß eine optimale Querschnittsausnutzung vorliegt.

Weitere Vorteile ergeben sich aus der Beschreibung und der beigefügten Zeichnung.

Es versteht sich, daß die vorstehend geschilderten und die nachstehend noch erläuterten Merkmale nicht nur in der jeweils angegebenen Kombination sondern auch in anderen Kombinationen oder jeweils für sich alleine erfindungsgemäß verwenbar sind, ohne den Rahmen der vorliegenden Erfindung zu verlassen.

Die Erfindung ist in der Zeichnung dargestellt und wird in der nachfolgenden Beschreibung näher erläutert. Es zeigen :

Fig. 1 eine schematische Darstellung eines Rohrleitungssystems zur Erläuterung einer erfindungsgemäßen Rohrpostanlage ;

Fig. 2 eine perspektivische Ansicht einer erfindungsgemäß verwendeten Rohrpostbüchse, gegenüber Fig. 1 in stark vergrößertem Maßstab ;

Fig. 3 und 4 zwei Ansichten, einmal von der Breitseite und einmal von der Schmalseite einer Rohrpostbüchse in einem geraden Rohrleitungsstück ;

Fig. 5 eine Darstellung wie Fig. 3, jedoch für den Fall des Durchfahrens eines schmalen Krümmers des Rohrleitungssystems ;

Fig. 6 eine Darstellung wie Fig. 4, jedoch für den Fall des Durchfahrens eines breiten Rohrleitungskrümmers des Rohrleitungssystems.

Fig. 7 in vergrößertem Maßstab eine Darstellung, ähnlich wie die rechte Hälfte von Fig. 4 zur Erläuterung eines weiteren Ausführungsbeispieles mit in Fahrtrichtung nicht-durchgehenden Dichtprofilen.

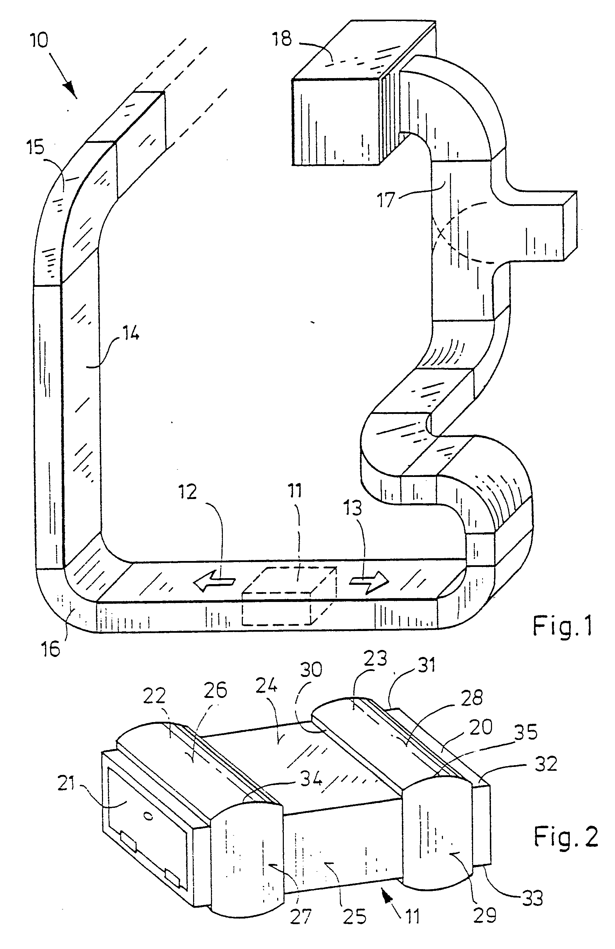

In Fig. 1 bezeichnet 10 insgesamt eine erfindungsgemäße Rohrpostanlage. Eine Rohrpostbüchse 11 ist, wie mit Pfeilen 12 und 13 angedeutet, in verschiedenen Richtungen in einem Rohrleitungssystem verfahrbar.

Die Rohrpostbüchse 11 hat eine im wesentlichen quaderförmige Gestalt und ihr Umriß, in Fahrtrichtung der Pfeile 12, 13 gesehen, ist rechteckförmig mit unterschiedlicher Länge der Rechteckseiten.

Das Rohrpostsystem besteht zum einen aus geraden Leitungsstücken 14 mit ebenfalls quer zur Fahrtrichtung rechteckförmigem Innenquerschnitt. Zum anderen weist das Rohrleitungssystem schmale Krümmer 15 auf, bei denen die Schmalseite gekrümmt verläuft sowie breite Krümmer 16, bei denen die Breitseite gekrümmt verläuft.

Weiterhin ist in dem Rohrleitungssystem eine Station 17 angedeutet, mit der Rohrpostbüchsen 11 ein- und ausgefahren oder umgelenkt werden können.

Die Rohrpostanlage 10 umfaßt schließlich noch ein Gebläse 18, mit dem Über- oder Unterdruck im Rohrleitungssystem erzeugt werden kann, um die Rohrpostbüchse 11 zu befördern.

Es versteht sich, daß das gesamte in Fig. 1 dargestellte System äußerst schematisiert ist und weitere, an sich bekannte Einheiten, insbesondere Regel- und Steuereinheiten der Übersichtlichkeit halber nicht dargestellt sind.

Fig. 2 zeigt in perspektivischer Darstellung und in vergrößertem Maßstab die Einzelheiten der Rohrpostbüchse 11.

Man erkennt, daß die Rohrpostbüchse 11 einen quaderförmigen Kasten 20 umfaßt, der an einer Stirnseite mit einem Deckel 21 zum Einlegen oder Entnehmen von Transportgut versehen ist. Aufgrund der quaderförmigen Gestalt des Kastens 20 eignet sich die Rohrpostbüchse 11 insbesondere dazu, umfangreiches und nicht rollbares Schriftgut zu befördern.

Der Kasten 20 alleine weist, quer zur Fahrtrichtung gesehen, einen Umriß auf, der kleiner ist als der lichte Innenquerschnitt des Rohrleitungssystems. Um eine druckdichte Führung der Rohrpostbüchse 11 im Rohrleitungssystem zu gewährleisten, sind zwei, in Fahrtrichtung hintereinander angeordnete umlaufende Dichtprofile 22, 23 vorgesehen, deren Dicke so bemessen ist, daß die Dichtprofile 22, 23 den Raum zwischen dem Kasten 20 und den Innenoberflächen des Rohrleitungssystems ausfüllen.

Die Dichtprofile 22, 23 weisen breite Abschnitte 26, 28 und schmale Abschnitte 27, 29 auf, die eine Breitseite 24 bzw. eine Schmalseite 25 des Kastens 20 überspannen.

Die Oberfläche der Abschnitte 26 bis 29 ist zumindest abschnittsweise kreiszylindrisch, so daß sich die Enden der Abschnitte 26 bis 29 im Bereich von Längsecken 31, 32, 33, die die Breitseiten 24 mit den Schmalseiten 25 des Kastens 20 bilden, durchdringen, wie mit 34 und 35 angedeutet.

Die kreiszylindrische Oberflächenform der Abschnitte 26 bis 29 kann bis auf die Breitseiten 24 bzw. Schmalseiten 25 heruntergezogen sein, es ist jedoch auch möglich, Absätze 30 vorzusehen, um eine entsprechende Bauhöhe der Abschnitte 26 bis 29 zu erzielen.

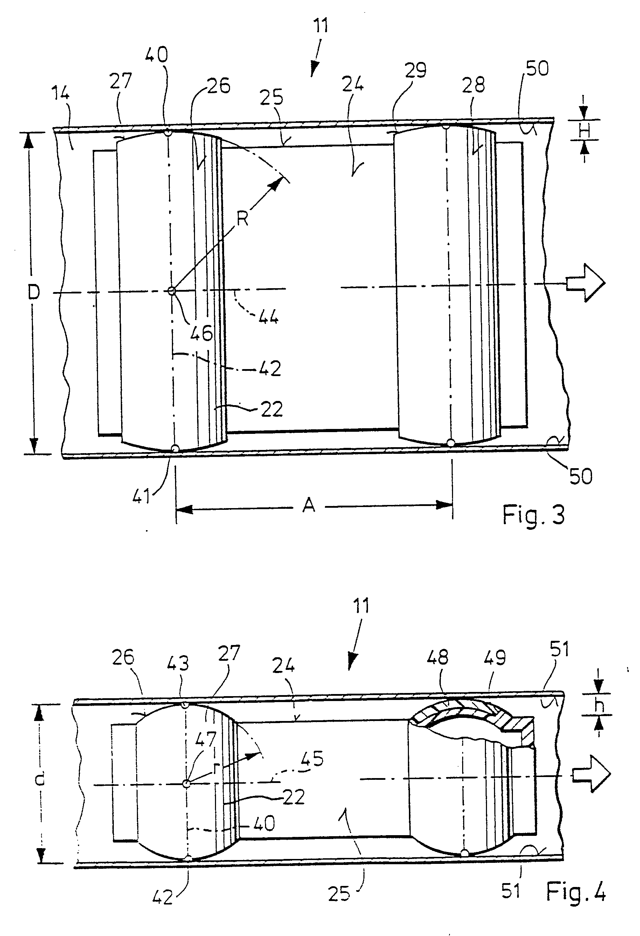

Die Fig. 3 und 4 zeigen in zwei Ansichten die Position der Rohrpostbüchse 11 in dem geraden Leitungsstück 14.

Aufgrund der kreiszylindrischen Oberfläche der Abschnitte 26 bis 29 liegt die Rohrpostbüchse 11 entlang von Linien 40, 41, 42, 43 an Innenoberflächen 50, 51 der Schmalseite bzw. der Breitseite des geraden Leitungsstücke 14 an.

Bezeichnet man die Symmetrielinien des Leitungsstücks 14 in den Ansichten der Fig. 3 und 4 mit 44 und 45, so erkennt man, daß die Radien R bzw. r der kreiszylindrischen Oberflächen der Abschnitte 26 bis 29 die Mittellinien 44 bzw. 45 in einem Schnittpunkt 46 bzw. 47 schneiden und von diesem ausgehen. Dies bedeutet, daß beispielsweise in der Ansicht von Fig. 3 die Innenoberfläche 50 der Schmalseite des Leitungsstücks 14 eine Tangentialebene an die kreiszylindrische Oberfläche des schmalen Abschnittes 27 bildet.

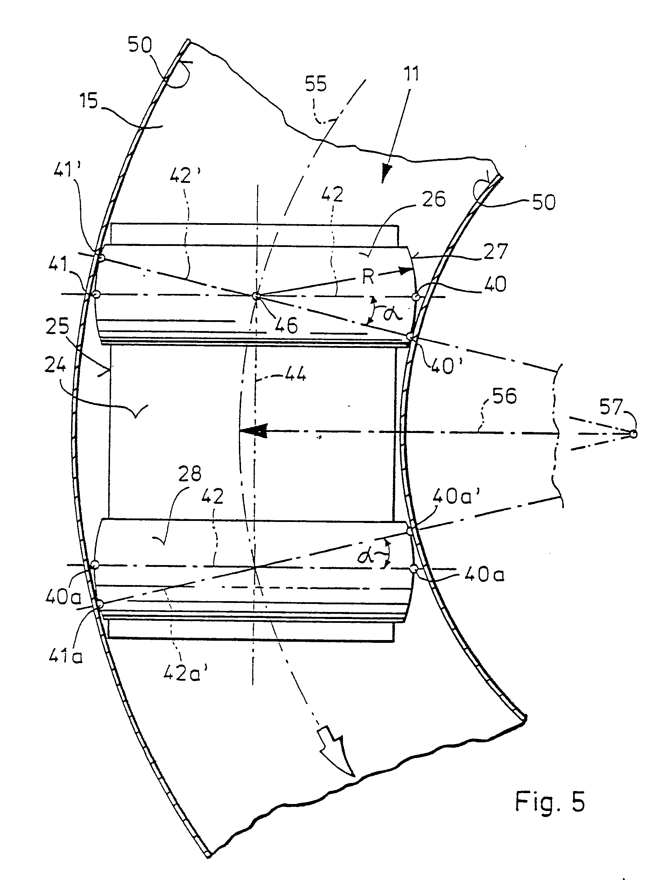

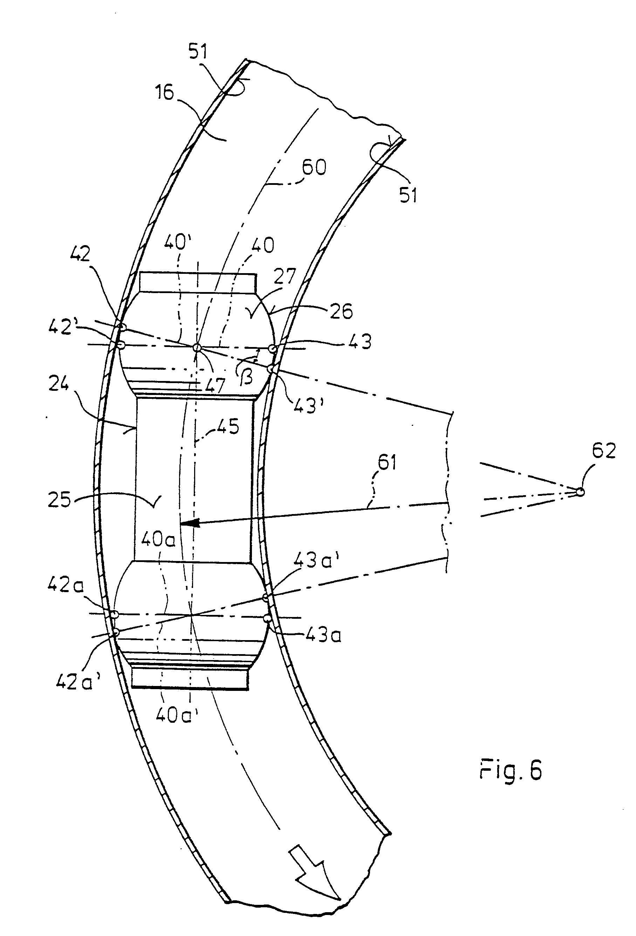

In Fig. 3 und 4 sind ferner mit H und h die Abstände der Schmalseite 25 bzw. der Breitseite 24 von der Innenoberfläche 50 der Schmalseite bzw. der Innenoberfläche 51 der Breitseite des Leitungsstücks 14 bezeichnet. Die Abstände H und h sind, wie man an den Fig. 5 und 6 noch sehen wird, so bemessen, daß die Krümmer 15, 16 des Rohrleitungssystems sicher durchfahren werden können, ohne daß die Innenwände 50, 51 die Schmalseite 25 bzw. die Breitseite 24 berühren.

In der rechten Hälfte von Fig. 4 ist noch eine Variante für die Anbringung der Dichtprofile 22, 23 dargestellt.

Im Rahmen der vorliegenden Erfindung können die Dichtprofile 22, 23 entweder einstückig mit dem Kasten 20 ausgebildet sein, sie können aber auch aufgeklebt, aufgeschweißt oder dgl. sein, ferner ist es möglich, die Dichtprofile 22, 23 aus einem besonders geeigneten Material herzustellen, daß einerseits so schmiegsam ist, daß es auch beim Durchfahren der Krümmer 15, 16 eine ausreichende Dichtwirkung gewährleitstet, andererseits aber auch hinreichend abriebfest ist.

Bei der Variante in der rechten Hälfte von Fig. 4 ist ein Dichtprofil 48 als Einsatz in einer Ausnehmung 49 des Kastens 20 ausgebildet, wobei der Kasten 20 im Bereich des Dichtprofils 48 an sich gewölbt ist.

Fig. 5 zeigt die Rohrpostbüchse 11, in einer Ansicht ähnlich Fig. 3, beim Durchfahren des schmalen Krümmers 15. Die Mittellinie des schmalen Krümmers 15 ist mit 55 bezeichnet und 56 ist der Radius der Krümmung, der von einem in verkürzter Darstellung angedeuteten Mittelpunkt 57 ausgeht.

Man erkennt aus Fig. 5 deutlich, daß beim Durchfahren des schmalen Krümmers 15 die Berührungslinien 40, 41 aus Fig. 3 um einen Umfangswinkel $\alpha$ auf der kreiszylindrischen Oberfläche des schmalen Abschnittes 27 versetzt sind und jetzt bei 40' bzw. 41' liegen. Entsprechendes gilt, nur in gegensinniger Richtung, für die Berührungslinien 40a, 41a des breiten Abschnittes 28, die in eine Position 40a' bzw. 41a' gelangen. Entsprechend verschwenken sich auch die Berührungslinien 42 bzw. 42a, sie nehmen jetzt eine Position 42' bzw. 42a' ein, die ebenfalls um den Winkel $\alpha$ verschwenkt ist.

Verlängert man die Berührungslinien 42' und 42a', so schneiden sie sich im Mittelpunkt 57. Dies liegt daran, daß die Berührungslinien 42', 42a' weiterhin durch den Schnittpunkt 46 der Mittellinie 55 des schmalen Krümmers 15 mit der Mittellinie 44 der Breitseite 24 der Rohrpostbüchse 11 gehen. Da der Schnittpunkt 46 auch Ausgangspunkt des Radius R ist, berühren sich der schmale Abschnitt 27 und die Innenoberfläche 50 der Schmalseite des schmalen Krümmers 15 in einer gemeinsamen Tangentialebene.

Dies bedeutet, daß unabhängig von der Länge des Krümmungsradius 56 der Mittellinie 55 des Krümmers 15 ein extrem reibungsarmes Durchfahren möglich ist, weil aufgrund der rein tangentialen Berührung Reibungsverluste infolge von Verklemmungen ausgeschlossen sind.

Entsprechendes gilt, wenn die Rohrpostbüchse 11 den breiten Krümmer 16 durchfährt, wie deutlich Fig. 6 zu entnehmen ist. Die Verhältnisse beim Durchfahren des breiten Krümmers 16 entsprechen sinngemäß vollkommen denjenigen, die bereits zu Fig. 5 ausführlich geschildert wurden, so daß zur Vermeidung von Wiederholungen darauf verzichtet werden soll. In Fig. 6 sind ebenfalls die verschobenen Positionen der Berührungslinien mit einem ' bezeichnet und die Verhältnisse bei dem zweiten Dichtprofil sind durch Hinzufügen eines a gekennzeichnet.

In Fig. 6 ist der von einem Mittelpunkt 62 ausgehender Radius 61 eine Mittellinie 60 des breiten Krümmers 16 genau so lang wie der entsprechende Krümmungsradius 56 des schmalen Krümmers 15 in Fig. 5.

Lediglich der Winkel β, um den die Berührungslinie 43 nach 43' wandert, wenn die Rohrpostbüchse 11 den breiten Krümmer 16 durchfährt, ist etwas kleiner als der Winkel α in Fig. 5, weil der Abstand der Innenoberflächen 51 von der Mittellinie 60 kleiner ist, als dies beim schmalen Krümmer 15 gemäß Fig. 5 der Fall war.

Die Fig. 5 und 6 zeigen auch deutlich, die Abstände und H und h der Fig. 3 und 4 sowie der Abstand A der Dichtprofile 22, 23 in Fahrtrichtung gerade so bemessen werden können, daß bei gegebenen Krümmungsradien 56, 61 der Krümmer 15, 16, die bevorzugt gleich groß sind, gerade noch keine Berührung der Innenwände 50, 51 an den Seiten 24, 25 des Kastens 20 stattfindet.

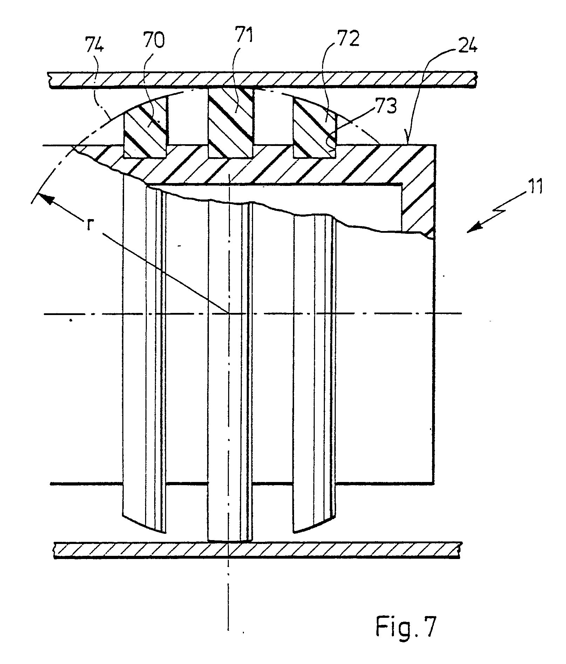

Bei dem in Fig. 7 in vergrößertem Maßstab dargestellten Ausführungsbeispiel werden statt der massiven Dichtprofile Einzel-Dichtprofile 70, 71, 72 verwendet, die beispielsweise in umlaufende Nuten 73 der Rohrpostbüchse 11 eingesetzt, eingeklebt, eingeschweißt oder dergleichen sein können, die jedoch natürlich auch auf die Oberfläche, beispielsweise die Breitseite 24 aufgeklebt, aufgeschweißt, aufgeschrumpft, aufgeschraubt oder dergleichen sein können.

Trotz der in Fahrtrichtung gesehen diskontinuierlichen Oberfläche der Einzel-Dichtprofile 70, 71, 72 weisen diese jeweils eine Oberfläche auf, die auf einer halbzylindrischen Hüllkurve 74 liegt, wie sie auch bei den massiv ausgebildeten Dichtprofilen 22, 23, 48 der zuvor beschriebenen Ausführungsbeispiele gegeben war. Auch der Krümmungsradius r der Hüllkurve 74 stimmt mit dem Krümmungsradius r der Fig. 4 überein.

## Patentansprüche

1. Rohrpostanlage mit einem Rohrleitungssystem (14, 15, 16, 17), mit in dem Rohrleistungssystem (14, 15, 16, 17) luftabdichtend geführten Rohrpostbüchsen (11) und mit einem Saug/Druck-Gebläse (18) zum Erzeugen eines Über- oder Unterdrucks im Rohrleistungssystem (14, 15, 16, 17), wobei der Innenquerschnitt des Rohrleistungssystems (14, 15, 16, 17) und der Umriß der Rohrpostbüchsen (11) senkrecht zur Fahrtrichtung rechteckig sind und die Rohrpostbüchsen (11) quaderförmig mit einer Breitseite (24) und einer Schmalseite (25) ausgebildet sind, wobei ferner der Umriß des Quaders senkrecht zur Fahrtrichtung kleiner als der Innenquerschnitt ist und der Quader senkrecht zur Fahrtrichtung mit umlaufenden Dichtprofilen (22, 23 ; 48 ; 70, 71, 72) versehen ist, die in Fahrtrichtung ballig ausgebildet sind, dadurch gekennzeichnet, daß die Dichtprofile (22, 23 ; 48 ; 70, 71, 72) zumindest abschnittsweise kreiszylindrische Oberflächen aufweisen und sich an ihren Enden im Bereich von Ecken (31, 32, 33) der Rohrpostbüchsen (11) durchdringen (34, 35), daß ein auf der Schmalseite (25) angeordneter schmaler Abschnitt (27) des Dichtprofils (22) einen Oberflächen-Krümmungsradius (R) aufweist, der gleich der halben lichten Weite (D) des Innenquerschnittes in der breiten Richtung senkrecht zur Fahrtrichtung ist, und daß ein auf der Breitseite (4) angeordneter breiter Abschnitt (26) des Dichtprofils (23 ; 48 ; 70, 71, 72) einen Oberflächen-Krümmungsradius (r) aufweist, der gleich der halben lichten Weite (d) des Innenquerschnittes in der schmalen Richtung senkrecht zur Fahrtrichtung ist.

2. Rohrpostanlage nach Anspruch 1, dadurch gekennzeichnet, daß die Dichtprofile aus einer Gruppe zueinander paralleler und beabstandeter Einzel-Dichtprofile (70, 71, 72) bestehen, deren Oberflächen auf einer kreiszylindrischen Hüllenkurve (74) liegen.

3. Rohrpostanlage nach Anspruch 1 oder 2, dadurch gekennzeichnet, daß die Dichtprofile (22, 23 ; 48 ; 70, 71, 72) symmetrisch zu den Mittellinien (44, 45) der Breitseite (24) und der Schmalseite (25) angeordnet sind.

4. Rohrpostanlage nach einem der Ansprüche 1 bis 3, dadurch gekennzeichnet, daß die quaderförmige Rohrpostbüchse (11) in Fahrtrichtung hintereinander mit zwei umlaufenden Dichtprofilen (22, 23 ; 48 ; 70, 71, 72) versehen ist.

5. Rohrpostanlage nach einem der Ansprüche 1 bis 4, dadurch gekennzeichnet, daß das Rohrleitungssystem (14, 15, 16, 17) schmale Krümmer (15) mit gekrümmter Schmalseite sowie breite Krümmer (16) mit gekrümmter Breitseite aufweist und daß die Krümmungsradien (56, 61) der Mittellinien (55, 60) der Krümmer (15, 16) gleich groß sind.

## Claims

1. Pneumatic conveyor with a pipe system (14, 15, 16, 17), with pneumatic dispatch carriers (11) guided in air-sealing manner in the pipe system (14, 15, 16, 17) and with a suction/pressure fan (18) for producing an overpressure or underpressure in the pipe system (14, 15, 16, 17), the internal cross-section of the pipe system (14, 15, 16, 17) and the contour of the pneumatic dispatch carriers (11) at right angles to the direction of travel being rectangular and the pneumatic dispatch carriers (11) are constructed in parallelepipedic manner with a wide side (24) and a narrow side (25), in which the contour of the parallelepiped at right angles to the direction of travel is smaller than the internal cross-section and the parallelepiped is provided with all-round sealing profiles (22, 23 ; 48 ; 70, 71, 72) at right angles to the direction of travel and which are convex in the direction of travel, characterized in that the sealing profiles (22, 23 ; 48 ; 70, 71, 72) at least zonally have circular cylindrical surfaces and penetrate (34, 35) at their ends in the vicinity of the corners (31, 32, 33), that a narrow portion (27) of the sealing profile (22) arranged on the narrow side (25) has a surface radius of curvature (R) which is the same as half the internal diameter (D) of the inner cross-seciton in the width direction at right angles to the direction of travel and that a wide portion (26) of the sealing profile (23 ; 48 ; 70, 71, 72) arranged on the wide side (4) has a surface radius of curvature (r), which is the same as half the inside diameter (D) of the internal cross-section in the width direction at right angles to the direction of travel.

2. Pneumatic conveyor according to claim 1, characterized in that the sealing profiles comprise a group of parallel,· spaced individual sealing profiles (70, 71, 72), whose surfaces are located on a circular cylindrical enveloppe curve (74).

3. Pneumatic conveyor according to claims 1 or 2, characterized in that the sealing profiles (22, 23 ; 48 ; 70, 71, 72) are symmetrical to the axes (44, 45) of the wide side (24) and the narrow side (25).

4. Pneumatic conveyor according to one of the claims 1 to 3, characterized in that the parallelepipedic pneumatic dispatch carrier (11) is successively provided in the direction of travel with two all-round sealing profiles (22, 23 ; 48 ; 70, 71, 72).

5. Pneumatic conveyor according to one of the claims 1 to 4, characterized in that the pipe system (14, 15, 16, 17) has narrow bends (15) with a curved narrow side and wide bends (16) with a curved wide side and that the radii of curvature (56, 61) of the axes (55, 60) of bends (15, 16) are of the same size.

**Revendications**

1. Installation de transport tubulaire comportant un système de conduites tubulaires (14, 15, 16, 17), des cartouches de transport (11) guidées d'une manière étanche à l'air dans le système de conduites tubulaires (14, 15, 16, 17), et une soufflante d'aspiration/refoulement (18) servant à produire une surpression ou une dépression dans le système de conduites tubulaires (14, 15, 16, 17), et dans laquelle la section transversale intérieure du système de conduites tubulaires (14, 15, 16, 17) et le contour des cartouches (11) sont rectangulaires perpendiculairement à la direction de déplacement et les cartouches (11) sont réalisées avec une forme parallélépipédique comportant un côté large (24) et un côté étroit (25), et dans laquelle, en outre, le contour du parallélépipède, perpendiculairement à la direction de déplacement est plus petit que la section transversale intérieure et le parallélépipède comporte des profilés périphériques d'étanchéité (22, 23 ; 48 ; 70, 71, 72), qui sont disposés perpendiculairement à la direction de déplacement et possèdent une forme convexe dans la direction de déplacement, caractérisée par le fait que les profilés d'étanchéité (22, 23 ; 48 ; 70, 71, 72) possèdent, au moins par intervalles, des surfaces cylindriques circulaires, et ressortent (34, 35), au niveau de leurs extrémités, dans la zone de coins (31, 32, 33) des cartouches (11), qu'une section étroite (27), située sur le petit côté (25), du profilé d'étanchéité (22) possède une surface dont le rayon de courbure (A) est égal à la moitié de la largeur intérieure (D) de la section transversale intérieure dans la direction du côté large, perpendiculairement à la direction de déplacement, et qu'une section large (26), disposée sur le côté large (4), du profilé d'étanchéité (23 ; 48 ; 70, 71, 72) possède une surface, dont le rayon de courbure (r) est égal à la moitié de la largeur intérieure (d) de la section transversale intérieure, dans la direction du côté étroit, perpendiculairement à la direction de déplacement.

2. Installation de transport tubulaire suivant la revendication 1, caractérisée par le fait que les profilés d'étanchéité sont constitués par un groupe de profilés d'étanchéité individuels (70, 71, 72), parallèles entre eux et distants les uns des autres et dont les surfaces sont situées sur une courbe enveloppe cylindrique circulaire (74).

3. Installation de transport tubulaire suivant la revendication 1 ou 2, caractérisée par le fait que les profilés d'étanchéité (22, 23 ; 48 ; 70, 71, 72) sont disposés symétriquement par rapport aux lignes médianes (44, 45) du côté large (24) et du côté étroit (25).

4. Installation de transport tubulaire suivant l'une des revendications 1 à 3, caractérisée par le fait que les cartouches parallélépipédiques (11) comportent deux profilés périphériques d'étanchéité (22, 23 ; 48 ; 70, 71, 72), situés l'un derrière l'autre dans la direction de déplacement.

5. Dispositif de transport tubulaire suivant l'une des revendications 1 à 4, caractérisé par le fait que le système de conduites tubulaires (14, 15, 16, 17) comporte des coudes étroits (15), dont le petit côté est cintré, ainsi que des coudes larges (16), dont le côté large est cintré, et que les rayons de courbure (56, 61) des lignes médianes (55, 60) des coudes (15, 16) sont égaux.

Fig.1

Fig.2

Fig. 3

Fig. 4

2

Fig. 5

Fig. 6

Fig. 7